# DEMANDE DE BREVET EUROPEEN

(11) **EP 1 690 707 A1**
(43) Date de publication de la demande: **16.08.2006**
(21) Numéro de dépôt: 06290189.7
(22) Date de dépôt: 01.02.2006
(51) Int. Cl.: B60H 1/34

(54) **Aérateur pour véhicule comprenant un corps sphérique défini par des déflecteurs**

(30) Priorité: 09.02.2005 FR 0501298
(71) Demandeur: Key Plastics International, 61130 Belleme (FR)
(72) Inventeur: Avanzini, Philippe, 61130 Belleme (FR); Davril, Jean-Louis, 61400 Mortagne au Perche (FR)
(74) Mandataire: Lemoine, Robert

(57) **Abrégé**

L'aérateur selon l'invention comprend un corps extérieur (1) délimitant un conduit de circulation d'air, une bague intermédiaire (5) montée rotative dans le conduit et un corps intérieur sphérique (6) défini par des déflecteurs (7) et par un anneau (8) comportant deux tourillons extérieurs (9) diamétralement opposés. Le corps sphérique (6) est monté pivotant sur la bague intermédiaire (5) par l'intermédiaire des tourillons (9) et comporte un disque central (10) solidaire de l'anneau (8) et s'étendant parallèlement à l'axe longitudinal de ce dernier. Les deux tourillons (9) sont dans le prolongement d'un diamètre du disque central (10).

Par ailleurs, les déflecteurs (7) sont répartis en deux groupes de constitution différente et situés de part et d'autre de l'anneau.

## Description

La présente invention concerne un aérateur pour véhicule, notamment pour véhicule automobile, comprenant un corps extérieur délimitant un conduit de circulation d'air, une bague intermédiaire montée rotative dans le conduit, et un corps intérieur sphérique défini par des déflecteurs et par un anneau comportant deux tourillons extérieurs diamétralement opposés, le corps sphérique étant monté pivotant sur la bague intermédiaire par l'intermédiaire des deux tourillons de l'anneau.

Les aérateurs actuels de ce type permettent de diriger le flux d'air dans des directions très diverses à l'intérieur de l'habitacle des véhicules.

Il suffit en effet d'orienter judicieusement le corps sphérique pour que le flux d'air soit émis dans une direction prédéterminée choisie entre deux directions extrêmes respectivement dirigées vers la droite et vers la gauche et deux autres directions externes respectivement dirigées vers le bas et vers le haut.

Les aérateurs présentés ci-dessus ont toutefois l'inconvénient de laisser passer une certaine quantité d'air lorsqu'ils sont en position fermée, ce qui peut constituer une gène pour les personnes situées à l'avant des véhicules.

La présente invention se propose notamment de remédier à cet inconvénient et, pour ce faire, elle a pour objet un aérateur ayant la structure indiquée au premier paragraphe ci-dessus et qui est caractérisé en ce que le corps sphérique comporte un disque central solidaire de l'anneau et s'étendant parallèlement à l'axe longitudinal de ce dernier, les deux tourillons de l'anneau étant dans le prolongement d'un diamètre du disque central.

Il convient de faire pivoter judicieusement le corps sphérique pour disposer le disque central perpendiculairement à l'axe longitudinal de la bague intermédiaire et empêcher ainsi la sortie d'un flux d'air hors de l'aérateur.

Dans cette position du disque central, une étanchéité satisfaisante peut en effet être facilement assurée entre l'anneau et le disque central en choisissant convenablement les dimensions de ces éléments et la matière utilisée pour les fabriquer.

Selon une caractéristique importante de l'invention, les déflecteurs sont répartis en deux groupes de constitution différente et situés de part et d'autre de l'anneau, le disque central ayant le même diamètre que le corps sphérique et constituant un déflecteur commun aux deux groupes.

Etant donné que les déflecteurs sont répartis en deux groupes de constitution différente, les possibilités pour que le flux d'air sorte de l'aérateur dans des directions différentes sont nettement plus grandes, ce qui permet un meilleur contrôle de la répartition de l'air entrant dans l'habitacle du véhicule et améliore par conséquent le confort des passagers.

Selon un mode de réalisation particulier de l'invention, l'un des groupes peut comprendre des déflecteurs constitués par des éléments tronconiques dont les petites bases sont tournées vers le centre du corps sphérique et dont les axes coïncident avec le diamètre du disque central qui est perpendiculaire aux tourillons.

Lorsque les éléments tronconiques sont dirigés vers l'habitacle du véhicule, le flux d'air sortant de l'aérateur se répartit latéralement dans la zone s'étendant au-delà de la périphérie de l'aérateur.

Le flux d'air entrant dans l'habitacle ne peut donc pas dans ce cas atteindre les passagers du véhicule et leur occasionner une gêne.

De préférence, les éléments tronconiques forment avec le disque central des angles qui augmentent avec la distance les séparant de ce dernier, ces angles pouvant varier d'environ 10 à environ 40°.

Selon le mode de réalisation particulier ci-dessus, l'autre groupe peut comprendre des déflecteurs constitués par des demi-disques équidistants entre eux et parallèles au disque central.

Lorsque les demi-disques sont dirigés vers l'habitacle du véhicule, le flux d'air sortant de l'aérateur se dirige en ligne droite à sa sortie du corps sphérique.

Le flux d'air sortant de l'aérateur peut donc dans ce cas se diriger dans des zones particulières de l'habitacle situées en avant du corps sphérique.

Un passager peut évidemment orienter le corps sphérique de manière à être ou non sur la trajectoire du flux d'air.

Selon une variante de réalisation, l'autre groupe peut comprendre des déflecteurs constitués par des éléments cylindriques coaxiaux et dans lesquels le disque central s'étend diamétralement.

Lorsque les éléments cylindriques sont dirigés vers l'habitacle du véhicule, le flux d'air sortant de l'aérateur se dirige ici encore en ligne droite à sa sortie du corps sphérique.

Deux modes d'exécution de la présente invention seront décrits ci-après à titre d'exemples nullement limitatifs en référence aux dessins annexés dans lesquels :
- la figure 1 est une vue de face schématique montrant un aérateur conforme à l'invention, cet aérateur étant installé sur le tableau de bord d'un véhicule automobile ;
- la figure 2 est une vue montrant l'aérateur partiellement démonté, le corps extérieur étant représenté en coupe tandis que la bague intermédiaire, en partie arrachée, et le corps sphérique sont représentés en position assemblée ;
- la figure 3a est une vue en coupe selon la ligne III-III de la figure 2 ;
- la figure 3b est une vue en coupe analogue à la figure 3a mais montrant le corps sphérique après rotation de 180° ;
- la figure 4 est une vue en plan selon la ligne IV-IV de la figure 2 ;
- la figure 5 est une vue en plan selon la ligne V-V de la figure 2 ;
- la figure 6 est une vue en coupe du corps sphérique et de la bague intermédiaire d'un autre aérateur conforme à l'invention, cette vue étant effectuée au même niveau que sur la figure 3 ;
- la figure 7 est une vue en plan selon la ligne VII-VII de la figure 6 ;
- la figure 8 est une vue en plan selon la ligne VIII-VIII de la figure 6 ; et
- la figure 9 est une vue en plan selon la ligne IX-IX de la figure 6.

Les aérateurs représentés sur les dessins ont été conçus pour être installés sur le tableau de bord d'une automobile.

Il va de soi cependant que l'on ne sortirait pas du cadre de la présente invention si ces aérateurs étaient installés sur le panneau intérieur d'une portière ou sur tout autre support situé dans l'habitacle de l'automobile. Ils pourraient également être utilisés pour diffuser de l'air dans l'habitacle d'un véhicule de transport de personnes tel qu'un avion ou un wagon.

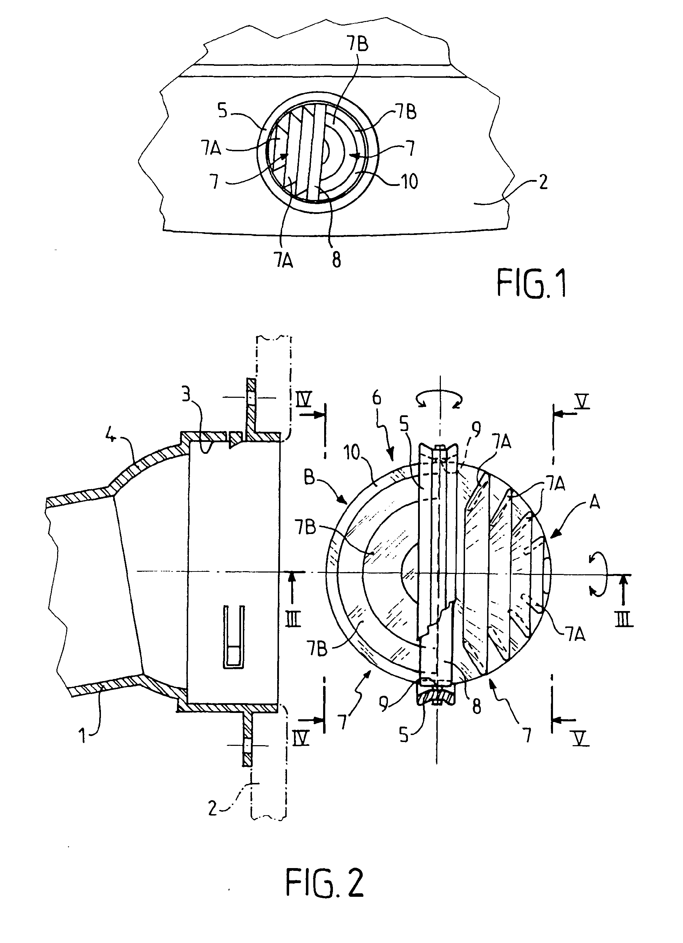

L'aérateur représenté sur les figures 1 à 5 comprend tout d'abord un corps extérieur 1 dont la partie antérieure est fixée d'une manière connue en soi contre la face arrière du tableau de bord 2, au niveau d'une ouverture ménagée dans celui-ci, et dont la partie postérieure est reliée à l'installation de climatisation non représentée de l'automobile.

Le corps extérieur 1 constitue un conduit destiné à transférer dans l'habitacle du véhicule l'air provenant de l'installation de climatisation.

Il comporte une piste cylindrique 3 et une zone sphérique 4 prolongeant la piste 3 vers l'arrière.

L'aérateur comprend également une bague intermédiaire 5 s'appuyant contre la piste cylindrique 3 avec laquelle elle s'étend coaxialement, et un corps intérieur sphérique 6 défini par des déflecteurs 7 et par un anneau 8 comportant des tourillons extérieurs 9 diamétralement opposés.

La bague intermédiaire 5 est montée rotative sur la piste cylindrique 3 afin qu'un passager du véhicule puisse la faire tourner sur elle-même à l'intérieur du corps extérieur 1.

Le corps sphérique 6 est quant à lui monté pivotant sur la bague 5 par l'intermédiaire des deux tourillons 9 de l'anneau.

Il comporte un disque central 10 qui est solidaire de l'anneau 8 et qui s'étend parallèlement à l'axe longitudinal de ce dernier.

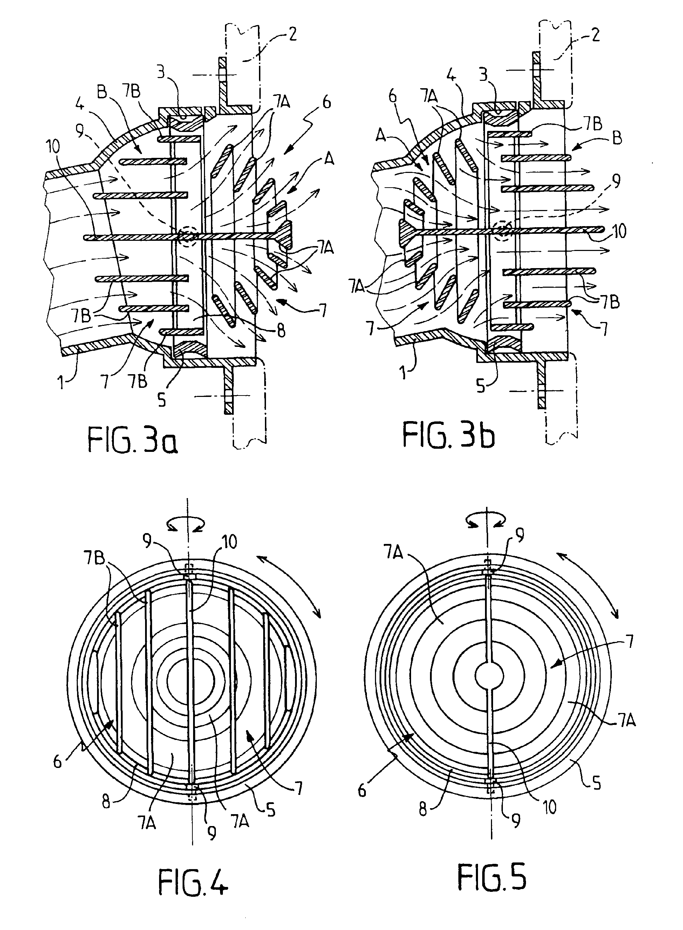

Comme le montrent clairement les figures 3a et 3b, le disque et l'anneau sont positionnés l'un par rapport à l'autre de telle sorte que les tourillons 9 s'étendent dans le prolongement d'un diamètre du disque.

Les déflecteurs 7 sont répartis en deux groupes A, B dont les constitutions sont différentes et qui sont situés de part et d'autre de l'anneau.

Le disque central 10, dont le diamètre correspond à celui du corps sphérique 6, constitue un déflecteur particulier puisqu'il est commun aux deux groupes.

Le groupe A comprend des déflecteurs constitués par des éléments tronconiques 7A dont les petites bases sont tournées vers le centre du corps sphérique 6 et dont les axes coïncident avec le diamètre du disque 10 qui est perpendiculaire aux tourillons 9.

Dans l'exemple représenté, le groupe A comprend cinq éléments tronconiques, mais rien ne s'oppose à ce que le nombre de ces éléments soit différent de cinq.

On notera ici que l'élément tronconique porté par le disque 10 est plein alors que les autres éléments sont creux.

Comme le montrent également les figures 3a et 3b, les éléments tronconiques 7A forment avec le disque 10 des angles qui augmentent avec la distance les séparant de ce dernier.

D'une manière générale, ces angles varient d'environ 10° à environ 40°.

Le groupe B comprend quant à lui des déflecteurs constitués par des demi-disques 7B équidistants entre eux et parallèles au disque 10.

Dans l'exemple représenté, le groupe B comprend 6 demi-disques, mais le nombre de ces derniers pourrait être différent.

On notera que les déflecteurs 7B extrêmes sont solidaires de l'anneau 8.

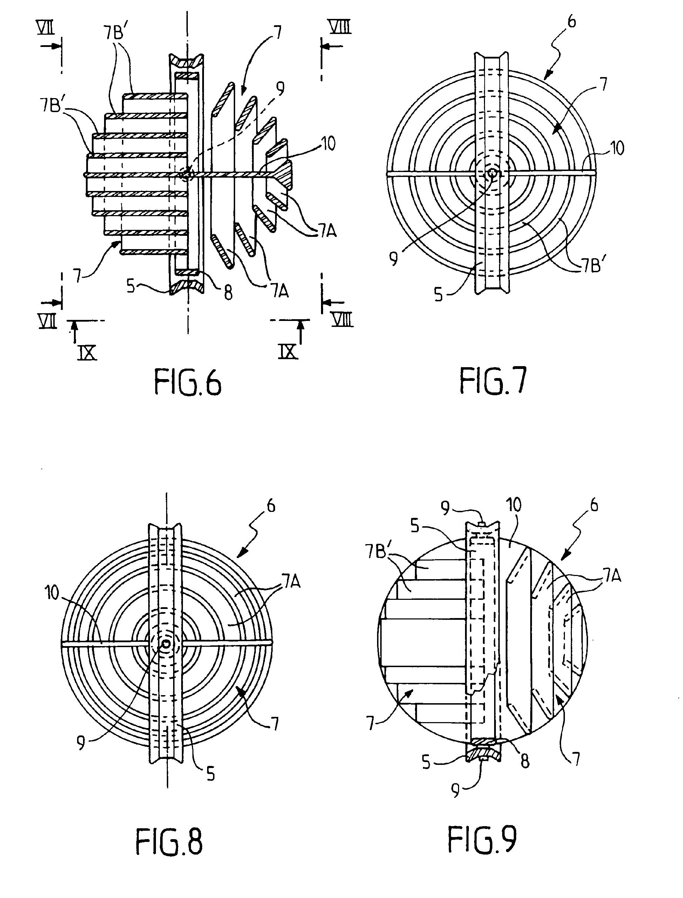

L'aérateur représenté sur les figures 6 à 8 diffère de celui qui vient d'être décrit en ce que les demi-disques 7B du groupe B sont remplacés par des éléments cylindriques coaxiaux 7B' dans lesquels le disque 10 s'étend diamétralement.

Les aérateurs qui viennent d'être décrits peuvent interrompre efficacement l'admission du flux d'air dans l'habitacle du véhicule.

Il suffit en effet de faire pivoter judicieusement le corps sphérique 6 sur la bague intermédiaire 5 afin que le disque central 10 s'étende perpendiculairement à l'axe longitudinal de cette dernière.

Dans cette position, le disque obture complètement l'intérieur de la bague 5 et empêche ainsi la circulation du flux d'air en direction de l'habitacle.

Les aérateurs conformes à l'invention permettent l'introduction dans l'habitacle soit d'un flux d'air diffusé latéralement lorsque les éléments tronconiques 7A sont dirigés vers l'intérieur de l'habitacle, soit d'un flux d'air projeté en ligne droite lorsque les demi-cercles 7B ou les éléments cylindriques 7B' sont dirigés vers l'intérieur de l'habitacle.

La figure 3a illustre la circulation du flux d'air lorsque les éléments tronconiques 7A sont dirigés vers l'habitacle alors que la figure 3b illustre le cas où ce sont les demi-disques 7B qui sont tournés vers l'habitacle.

Etant donné que la bague intermédiaire 5 est montée rotative sur le corps extérieur 1 et que le corps sphérique 6 est monté pivotant sur la bague 5, on conçoit aisément qu'un passager du véhicule peut, à l'aide d'une main, diriger dans de très nombreuses et diverses directions le flux d'air pénétrant dans l'habitacle.

Le passager peut évidemment faire en sorte que le flux d'air soit dévié en partie par les éléments tronconiques 7A et en partie par les demi-disques 7B ou les éléments cylindriques 7B'.

On ajoutera que les aérateurs qui viennent d'être décrits sont de préférence réalisés en matière plastique moulée, ce qui permet de réduire les coûts de fabrication.

La présente invention n'est pas limitée aux deux modes de réalisation décrits ci-dessus. Elle couvre en effet toutes les variantes combinant des moyens permettant, à la sortie des aérateurs, de dévier latéralement le flux d'air et des moyens permettant au flux d'air de se propager en ligne droite.

Ainsi, le groupe B pourrait par exemple comprendre une seconde série de demi-disques 7B s'étendant perpendiculairement aux demi-disques de l'aérateur représenté sur les figures 1 à 3.

## Revendications

1. Aérateur pour véhicule, notamment pour véhicule automobile, comprenant un corps extérieur (1) délimitant un conduit de circulation d'air, une bague intermédiaire (5) montée rotative dans le conduit avec lequel elle s'étend coaxialement, et un corps intérieur sphérique (6) défini par des déflecteurs (7) dont l'un d'eux est constitué par un disque central (10), le corps sphérique (6) étant monté pivotant sur la bague (5) par l'intermédiaire de deux tourillons (9) diamétralement opposés, **caractérisé en ce que** le corps sphérique (6) comporte un anneau (8) qui est solidaire du disque central (10) et dont l'axe est parallèle à ce dernier, et **en ce que** l'anneau (8) porte les deux tourillons (9) dans le prolongement d'un diamètre du disque central (10).

2. Aérateur selon la revendication 1, **caractérisé en ce que** les déflecteurs (7) sont répartis en deux groupes (A, B) de constitution différente et situés de part et d'autre de l'anneau (8), le disque central (10) ayant le même diamètre que le corps sphérique (6) et constituant un déflecteur commun aux deux groupes.

3. Aérateur selon la revendication 2, **caractérisé en ce que** l'un (A) des groupes comprend des déflecteurs constitués par des éléments tronconiques (7A) dont les petites bases sont tournées vers le centre du corps sphérique (6) et dont les axes coïncident avec le diamètre du disque central (10) qui est perpendiculaire aux tourillons (9).

4. Aérateur selon la revendication 3, **caractérisé en ce que** les éléments tronconiques (7A) forment avec le disque central (10) des angles qui augmentent avec la distance les séparant de ce dernier.

5. Aérateur selon la revendication 4, **caractérisé en ce que** les angles formés par les éléments tronconiques (7A) avec le disque central (10) varient d'environ 10 à environ 40°.

6. Aérateur selon l'une quelconque des revendications 1 à 5, **caractérisé en ce que** l'autre groupe (B) comprend des déflecteurs constitués par des demi-disques (7B) équidistants entre eux et parallèles au disque central (10).

7. Aérateur selon l'une quelconque des revendications 1 à 5, **caractérisé en ce que** l'autre groupe (B) comprend des déflecteurs constitués par des éléments cylindriques (7B') coaxiaux et dans lesquels le disque central (10) s'étend diamétralement.
